# EUROPÄISCHE PATENTSCHRIFT

(11) **EP 2 846 017 B1**
(45) Veröffentlichungstag und Bekanntmachung des Hinweises auf die Patenterteilung: **08.01.2020**
(21) Anmeldenummer: 14175150.3
(22) Anmeldetag: 01.07.2014
(51) Int. Cl.: F01N 5/02, F02G 5/02

(54) **Wärmetauschvorrichtung und Antriebseinheit für ein Kraftfahrzeug**
Heat exchange device and drive unit for a motor vehicle
Dispositif d'échange thermique et unité d'entraînement pour un véhicule automobile

(30) Priorität: 09.07.2013 DE 102013011519
(43) Veröffentlichungstag der Anmeldung: 11.03.2015
(73) Patentinhaber: Volkswagen Aktiengesellschaft, 38440 Wolfsburg (DE)
(72) Erfinder: Carstensen, Asmus, 38557 Osloss (DE); Semke, Artur, 38446 Wolfsburg (DE); Schulenburg, Thomas, 38550 Isenbüttel (DE); Herr, Andreas, Dr., 38442 Wolfsburg (DE); Fritzsche, Jörg, 38518 Gifhorn (DE); Dallmann, Marcus, 38527 Meine (DE); Käppner, Christoph, 38118 Braunschweig (DE); Volkmann, Jörg, Dr., 38459 Bahrdorf (DE); Maischik, Thomas, 38102 Braunschweig (DE)
(74) Vertreter: Bungartz, Florian

(56) Entgegenhaltungen:
- EP-A1- 2 466 086
- WO-A1-2012/125107
- DE-A1-102010 055 915
- FR-A1- 2 846 735

## Beschreibung

Die Erfindung betrifft eine Wärmetauschvorrichtung sowie eine eine solche Wärmetauschvorrichtung integrierende Antriebseinheit für ein Kraftfahrzeug.

Wärmetauschvorrichtungen, bei denen ein Wärmeübergang von einem Medium auf ein zweites Medium ohne Vermischung dieser Medien erfolgt, sind aus einer Vielzahl technischer Anwendungen bekannt.

In Kraftfahrzeugen stellt beispielsweise der Hauptkühler des Motorkühlkreises eine solche Wärmetauschvorrichtung dar, in der ein Wärmeübergang von der Kühlflüssigkeit des Motorkühlkreises auf die Umgebungsluft erfolgt, um eine Überhitzung des Motorkühlkreises und damit des Verbrennungsmotors und anderer von dem Motorkühlkreis gekühlter Komponenten des Kraftfahrzeugs zu verhindern.

Neben dieser und anderen Verwendungen, kommen Wärmetauschvorrichtungen in Kraftfahrzeugen auch in Systemen zum Einsatz, in denen die im Abgas enthaltene Wärmeenergie genutzt wird, um mechanische Leistung zu generieren. Da der Wirkungsgrad von Hubkolben-Brennkraftmaschinen, die für den Antrieb von Kraftfahrzeugen nahezu ausschließlich eingesetzt werden, bei lediglich ca. einem Drittel der eingesetzten Primärenergie liegt und die übrigen zwei Drittel der bei der Verbrennung freigesetzten Wärmeenergie Abwärme darstellt, die entweder über die Motorkühlung oder den Abgasstrang als Verlustwärme an die Umgebung abgegeben wird, stellt dies eine beachtete Möglichkeit dar, den Gesamtwirkungsgrad einer Antriebseinheit eines Kraftfahrzeugs zu steigern und damit den Kraftstoffverbrauch zu senken.

Die DE 10 2008 028 467 A1 beschreibt eine solche Vorrichtung zur Nutzung von Abwärme einer Verbrennungskraftmaschine. Dazu ist in den Abgasstrang der Verbrennungskraftmaschine ein erster Wärmetauscher, der Verdampfer, einer Dampfkreisprozessvorrichtung integriert. Die in dem Wärmetauscher von dem Abgas auf ein Arbeitsmedium der Dampfkreisprozessvorrichtung übertragene Wärmeenergie wird in einer Expansionsvorrichtung teilweise in mechanische Energie umgewandelt, die beispielsweise zur Unterstützung des Antriebs eines Kraftfahrzeugs oder zur Erzeugung elektrischer Energie genutzt werden kann. Stromab der Expansionsvorrichtung wird das Arbeitsmedium in einem zweiten Wärmetauscher, dem Kondensator, abgekühlt, wobei es kondensiert. Über eine Speisepumpe erfolgt eine Druckerhöhung des Arbeitsmediums und dessen Zufuhr zu dem Verdampfer.

Der Kondensator wird von dem Kühlmittel eines Motorkühlkreislaufs der Verbrennungskraftmaschine gekühlt. Der Rücklauf des Kühlmittels von dem Kondensator ist mittels eines 3-Wege-Ventils so schaltbar, dass das Kühlmittel entweder vor einem Hauptkühler oder vor der Verbrennungskraftmaschine in den Motorkühlkreis eingeleitet wird. Dies ermöglicht, die Abwärme, die das Kühlmittel in dem Kondensator aufnimmt, in einer Warmlaufphase der Verbrennungskraftmaschine zur schnelleren Aufwärmung des Kühlmittels zu nutzen. Dabei ist in bekannter Weise vorgesehen, den Motorkühler durch einen Bypass zu umgehen, um eine in der Warmlaufphase ungewünschte Kühlung des Kühlmittels zu vermeiden. Durch die Nutzung der in dem Kondensator anfallenden Abwärme erreicht die Verbrennungskraftmaschine schneller ihre Betriebstemperatur, was folglich mit einem geringen Kraftstoffverbrauch und Schadstoffausstoß während der Warmlaufphase verbunden ist. Nach dem Erreichen der Betriebstemperatur kann das durch den Kondensator aufgewärmte Kühlmittel direkt vor dem Motorkühler in den Motorkühlkreis eingeleitet werden. Dadurch kann verhindert werden, dass die Abwärme aus dem Kondensator die Kühlleistung für die Verbrennungskraftmaschine vermindert. Andererseits kann aber auch vorgesehen sein, das aus dem Kondensator austretende Kühlmittel nach dem Erreichen der Betriebstemperatur vor dem Verbrennungsmotor in den Motorkühlkreis einzuleiten. Dies kann vorgesehen sein, wenn die Motoraustrittstemperatur des Kühlmittels unter einen Sollwert abfällt, was beispielsweise bei längerer Bergabfahrt des Kraftfahrzeugs der Fall sein kann. Zusätzlich kann dann auch die Heizleistung einer Innenraumheizung, die auf einem Wärmetausch mit dem Motorkühlkreis beruht, verbessert werden.

Weiterhin ist es bekannt, Wärmespeicher, insbesondere Latent- oder chemische Wärmespeicher in den Motorkühlkreislauf zu intergieren (vgl. z.B. DE 10 2008 013 650 A1). Diese Wärmespeicher nehmen im Betrieb der Brennkraftmaschine nach dem Erreichen der Betriebstemperatur Wärme auf und speichern diese zwischen. Nach einem darauffolgenden Kaltstart der Brennkraftmaschine geben die Wärmespeicher die gespeicherte Wärme wieder in den Motorkühlkreislauf ab, wodurch die Warmlaufphase für die Brennkraftmaschine verkürzt wird.

Bekannt ist auch, beide Maßnahmen kombiniert bei einer Brennkraftmaschine einzusetzen, wobei keine Wechselwirkung zwischen dem Dampfkreisprozess und dem Wärmespeicher vorgesehen ist. Der Einsatz des Wärmespeichers ist dabei eine reine Kaltstartmaßnahme, während der Dampfkreisprozess erst nach dem Erreichen der Betriebstemperatur eingesetzt wird. Nachteilig bei diesen Systemen ist, dass sowohl der Verdampfer als auch der Wärmespeicher in den Abgasstrang integriert sind und mittels jeweils eines Bypasses umgehbar gemacht werden müssen, wenn zumindest bei ihrer Nichtnutzung die Erhöhung des Abgasgegendrucks, den der Verdampfer und der Wärmespeicher infolge ihrer Umströmung durch das Abgas erzeugen, vermieden werden soll.

Eine alternative Kombination eines Dampfkreisprozess zur Abwärmenutzung aus dem Abgas und eines Wärmespeicher ist aus der DE 10 2007 033 611 A1 bekannt. Dort ist vorgesehen, in Betriebszuständen des Verbrennungsmotors, wenn die in dem Abgas enthaltene Wärmeenergie größer ist als die Wärmeenergie, die in dem Verdampfer auf das Arbeitsmedium maximal übertragbar ist, mittels entsprechend ausgebildeter Bypässe und Ventile einen Teil des Abgasstroms in den Wärmespeicher umzuleiten, um diesen "aufzuladen", sofern er nicht bereits vollständig "aufgeladen" ist. Andererseits ist vorgesehen, in Betriebszuständen des Verbrennungsmotors, wenn die Wärmeenergie des Abgases geringer als die im Verdampfer umsetzbare Wärmeenergie ist, das Abgas vorab durch den Wärmespeicher zu führen, um dieses zu erwärmen, wodurch der Dampfkreisprozess dann besser betrieben werden kann. Damit dadurch nicht eine unzulässige Abkühlung von Abgasnachbehandlungsvorrichtungen des Abgasstrangs verbunden ist, sind sowohl der Wärmespeicher als auch der Verdampfer stromab dieser Abgasnachbehandlungsvorrichtungen in den Abgasstrang integriert.

Eine dazu funktional ähnliche Brennkraftmaschine mit einer Dampfkreisprozessvorrichtung ist aus der DE 10 2009 035 522 A1 bekannt. Dort ist in die Dampfkreisprozessvorrichtung ein Dampfspeicher integriert, in dem Dampf in Zeiten, in denen dieser erzeugt aber nicht genutzt werden kann, zwischenspeichert wird. Der gespeicherte Dampf wird dem Dampfkreisprozess wieder zuführt, wenn mehr Dampf umgesetzt werden kann, als durch Nutzung von Abgasabwärme erzeugt werden kann.

Eine weitere alternative Kombination eines Dampfkreisprozess zur Abwärmenutzung aus dem Abgas und eines Wärmespeicher ist aus der DE 10 2011 076 054 A1 bekannt. Dabei ist vorgesehen, den Wärmespeicher in den Dampfkreis zu integrieren und von dem Arbeitsmedium des Dampfkreises beaufschlagen zu lassen. Dazu ist vorgesehen, einen Vorlauf zu dem Wärmespeicher zwischen dem Verdampfer und der Expansionsmaschine und einen Rücklauf zwischen der Expansionsvorrichtung und dem Kondensator in den Dampfkreis zu integrieren. Grundsätzlich soll dadurch die Wärme, die der Wärmespeicher nach einem Kaltstart der Brennkraftmaschine auf das Arbeitsmedium überträgt, in dem Verdampfer auf das Abgas übertragen werden, wodurch die Aufheizzeit für in dem Abgasstrang stromab des Verdampfers angeordnete Abgasnachbehandlungsvorrichtungen verkürzt werden kann. Weiterhin ist in der DE 10 2011 076 054 A1 offenbart, dass alternativ oder zusätzlich zu dem Aufwärmen des Abgases in der Warmlaufphase auch vorgesehen sein kein, dass die Abwärme aus dem Kondensator die Warmlaufphase der Brennkraftmaschine verkürzt, indem der Kondensator von dem Kühlmittel des Motorkühlkreises gekühlt wird. Bei einer derartigen Nutzung des Arbeitsmediums kann auch vorgesehen sein, mittels einer Druckeinstelleinrichtung den Druck des Arbeitsmediums derart einzustellen, dass die Dampfphase temporär eliminiert wird und das Arbeitsmedium im gesamten Kreislauf in flüssiger Form zirkuliert.

Von kombinierten Heizungssystemen für Gebäude sind weiterhin sogenannte 3-Medien-Wärmetauscher bekannt, bei denen zwei wärmeaufnehmende Medien, zum einen Wasser für eine Warmwasserversorgung und zum anderen Wasser für eine Heizungsanlage, von einem wärmeabgebenden Medium, das beispielsweise in einem Brenner des Heizungssystems erhitzt wird, erwärmt werden. Bei diesen 3-Medien-Wärmetauschern erfolgt ein Wärmeübergang von dem wärmeabgebenden Medium parallel an die beiden wärmeaufnehmenden Medien.

Die EP 2 466 086 A1, die FR 2 846 735 A1 und die WO 2012/236207 A1 offenbaren jeweils Wärmetauschvorrichtungen, bei denen ein Wärmeübergang von einem ersten, in einem ersten Medienkanal strömenden Medium auf ein zweites, in einem zweiten Medienkanal strömendes Medium über ein in einem dritten Medienkanal angeordnetes Transfermedium erfolgt.

Ausgehend von diesem Stand der Technik lag der Erfindung die Aufgabe zugrunde, eine verbesserte Vorrichtung zur Nutzung der Abwärme einer Brennkraftmaschine anzugeben.

Diese Aufgabe wird durch eine Antriebseinheit gemäß dem unabhängigen Patentanspruch 9 gelöst. Eine u.a. in einer solchen Antriebseinheit einsetzbare Wärmetauschvorrichtung ist Gegenstand des unabhängigen Patentanspruchs 1. Vorteilhafte Ausgestaltungen der erfindungsgemäßen Wärmetauschvorrichtung und der erfindungsgemäßen Antriebseinheit sind Gegenstand der jeweiligen abhängigen Patentansprüche und ergeben sich aus der nachfolgenden Beschreibung der Erfindung.

Der Erfindung liegt die Erkenntnis zugrunde, dass bei einer gattungsgemäßen Antriebseinheit, wie sie aus der DE 10 2007 033 611 A1 bekannt ist, und die
- eine Brennkraftmaschine, die einen Verbrennungsmotor sowie einen Abgasstrang, über den Abgas aus dem Verbrennungsmotor abführbar ist, aufweist, und
- eine Kreisprozessvorrichtung zur (temporären) Wandlung der in dem Abgas enthaltenen Wärmeenergie in einem rechtsläufigen thermodynamischen Kreisprozess in mechanische Arbeit umfasst, wobei der Kreisprozess
   - einen (direkten oder indirekten) Wärmeübergang von dem Abgas auf ein Arbeitsmedium in einer ersten Wärmetauschvorrichtung umfasst, wodurch die Temperatur und/oder der Druck des Arbeitsmediums erhöht wird,
   - eine Expansion des Arbeitsmediums in einer Expansionsvorrichtung zur Erzeugung der mechanischen Arbeit umfasst, und
   - einen (direkten oder indirekten) Wärmeübergang von dem Arbeitsmedium auf ein Kühlmedium in einer zweiten Wärmetauschvorrichtung umfasst,
   der Wärmeübergang von dem Abgas auf das Arbeitsmedium mit Problemen verbunden sein kann, die eine aufwändige konstruktive Ausgestaltung des dabei eingesetzten Wärmetauschvorrichtung erforderlich macht. Dies gilt insbesondere dann, wenn die erste Wärmetauschvorrichtung direkt in den Abgasstrang integriert ist und somit die das Arbeitsmedium führende(n) Leitung(en) dieser Wärmetauschvorrichtung von dem Abgas umströmt werden. Die Leitungen und das darin geführte Arbeitsmedium können dann lokal Temperaturen von mehreren hundert Grad ausgesetzt sein. Dies stellt nicht nur eine erhebliche Anforderungen an den strukturellen Aufbau der ersten Wärmetauschvorrichtung sondern auch an das eingesetzte Arbeitsmedium. Beispielsweise ist in gattungsgemäßen Antriebseinheiten der rechtsläufige Kreisprozess regelmäßig als Dampfkreisprozess ausgebildet. Die dazu eingesetzten Arbeitsmedien müssen Verdampfungs- und Kondensationstemperaturen aufweisen, die in relativ engen Grenzen liegen. Die hierzu vielfach eingesetzten organischen Arbeitsmedien weisen dadurch aber eine relative niedrige Zersetzungstemperatur auf, die während des Kreisprozesses nicht überschritten werden darf. Bei dem häufig für solche Kreisprozesse eingesetzten Ethanol liegt diese beispielsweise bei ca. 361 °C. Die Einsetzbarkeit der Medien der NOVEC-Gruppe ist sogar auf unter 300°C beschränkt.

Um ein Erreichen der Zersetzungstemperatur des Arbeitsmediums zu vermeiden ist es bekannt, bei einer gattungsgemäßen Antriebseinheit die in den Abgasstrang integrierte Wärmetauschvorrichtung bei zu hohen Abgastemperaturen mittels eines Bypasses zu umgehen. Durch diese Ausgestaltung entfällt jedoch eine Nutzung der dann anfallenden Abwärme, was den Gesamtwirkungsgrad der Antriebseinheit schlechter werden lässt.

Der Erfindung liegt der Gedanke zugrunde, die Problematik zu hoher Spitzentemperaturen zu umgehen, indem ein direkter Wärmeübergang von dem Abgas auf das Arbeitsmedium soweit vermieden wird, dass auch bei der höchsten auftretenden Abgastemperatur die Zersetzungstemperatur des Arbeitsmediums nicht erreicht wird. Der Wärmeübergang erfolgt vielmehr indirekt über ein Transfermedium, insbesondere ein Transferfluid und vorzugsweise eine Transferflüssigkeit, das somit als "Wärmedämpfer" dient. Dadurch kann der Wärmeübergang gesteuert (z.B. durch eine Veränderung einer Fließgeschwindigkeit des Transfermediums) und damit ein gegebenenfalls stark schwankendes Wärmeangebot im Abgas "geglättet" werden. Zudem kann dadurch erreicht werden, dass der Wärmeübergang in dem zweiten Wärmetauscher, der vorzugsweise als Verdampfer fungiert, mit relativ konstanten Eintrittstemperaturen für das Arbeits- und das Transfermedium betrieben werden kann. Dies ermöglicht eine gute thermodynamische Auslegung des Verdampfers, da der Bereich des sogenannten Pinch-Points und die Zone, in der der Phasenwechsel zwischen flüssig und gasförmig des Arbeitsmediums vollzogen wird, relativ genau lokalisiert werden kann.

Umgesetzt wird dieser Grundgedanke der Erfindung bei einer gattungsgemäßen Antriebseinheit, indem eine entsprechende Wärmetauschvorrichtung mit einem Transfermedium für den indirekten Wärmeübergang von dem Abgas auf das Arbeitsmedium eingesetzt wird.

Eine solche Wärmetauschvorrichtung kann grundsätzlich mindestens zwei räumlich getrennt voneinander angeordnete Wärmetauscher umfassen, die über einen Zwischenkreis mit dem Transfermedium verbunden sind. In einem oder mehreren ersten Wärmetauschern würde dann Wärmeenergie von dem Abgas auf das Transfermedium und in mindestens einem zweiten Wärmetauscher Wärmeenergie von dem Transfermedium auf das Arbeitsmedium übergehen. Der Zwischenkreis kann dabei insbesondere auch noch eine Pumpe zum Umwälzen des Transfermediums und/oder einen Ausgleichsbehälter aufweisen. Ein weiterer Vorteil eines solchen Zwischenkreises kann darin liegen, dass die Abwärme des Abgases an mehreren Stellen mittels mehrerer erster Wärmetauscher abgegriffen wird. Dies kann direkt, durch die Anordnung eines Wärmetauschers in dem Abgasstrom oder indirekt, z.B. außenseitig an Abgas führenden Komponenten (z.B. Abgaskrümmer, Kühler einer Abgasrückführung, insbesondere Hochdruck-Abgasrückführung) des Abgasstrangs (ggf. auch des Motorkühlkreises, dessen Wärmeenergie im Wesentlichen auch aus dem Abgas stammt) erfolgen.

Durch die Zwischenschaltung des Transfermediums können weitere Vorteile generiert werden. Insbesondere besteht die Möglichkeit, das Transfermedium weitgehend (über-)drucklos in dem Zwischenkreis vorzuhalten, wodurch vermieden werden kann, das ein Wärmetauscher, der direkt hohen Abgastemperaturen ausgesetzt ist, auch noch hochdruckfest ausgebildet sein muss. Bei gattungsgemäßen Antriebseinheiten ist dies regelmäßig der Fall, weil den dortigen, als Verdampfer ausgebildeten Wärmetauschern das Arbeitsfluid unter einem Druck von regelmäßig 25 bar bis 30 bar zugeführt wird. Der erhebliche konstruktive Aufwand, den solche sowohl temperatur- als auch hochdruckfesten Wärmetauscher erforderlich machen, kann dadurch vermieden oder verringert werden.

Eine Wärmetauschvorrichtung mit mindestens einem ersten Wärmetauscher und einem davon strukturell getrennten zweiten Wärmetauscher kann jedoch nachteilig hinsichtlich des erforderlichen Bauraums sein.

Dies wird erfindungsgemäß dadurch vermieden, dass die Wärmetauschvorrichtung so ausgebildet ist, dass der Wärmeübergang der von dem Abgas stammenden Wärmeenergie zunächst auf das Transfermedium und von diesem auf das Arbeitsmedium in einer strukturellen Einheit erfolgt.

Demnach weist eine solche Wärmetauschvorrichtung (mindestens) einen ersten Medienkanal für ein erstes, vorzugsweise wärmeabgebendes Medium und (mindestens) einen zweiten Medienkanal für ein zweites, vorzugsweise wärmeaufnehmendes Medium auf, wobei in zumindest einem Abschnitt des Wärmetauschers (mindestens) ein dritter Medienkanal für ein Transfermedium zwischen dem ersten und dem zweiten Medienkanal ausgebildet ist, so dass ein Wärmeübergang von dem ersten Medium auf das zweite Medium über das Transfermedium erfolgt.

Eine kompakte Bauform und einen besonders guten Wärmetausch kann durch die Ausgestaltung der Wärmetauschvorrichtung als Plattenwärmetauscher erreicht werden. Dann kann vorgesehen sein, dass der zweite und/oder dritte Medienkanal in (jeweils) einer Platte ausgebildet ist, wobei die den dritten Medienkanal ausbildende Platte von dem wärmeabgebenden Medium (zumindest teilweise) umströmt wird. Dabei kann insbesondere vorgesehen sein, dass der zweite und/oder dritte Medienkanal in der jeweiligen Platte mehrfach umgelenkt (z.B. mäanderförmig) verläuft, um die Größe der Platte möglichst vollständig für einen Wärmeübergang auszunutzen.

Erfindungsgemäß ist vorgesehen, dass der dritte Medienkanal für das Transfermedium nur in einem Abschnitt der Wärmetauschvorrichtung zwischen dem ersten und dem zweiten Medienkanal angeordnet ist und in einem weiteren Abschnitt dies nicht der Fall ist, so dass ein Wärmeübergang von dem wärmeabgebenden Medium auf das wärmeaufnehmende Medium direkt (d.h. ohne Zwischenschaltung des Transfermediums) erfolgt. Bei einer Ausgestaltung der Wärmetauschvorrichtung als Plattenwärmetauscher kann dies vorzugsweise dadurch erreicht werden, dass die den dritten Medienkanal ausbildende Platte kleiner als die den zweiten Medienkanal ausbildende Platte ist, so dass die den zweiten Medienkanal ausbildende Platte in einem Abschnitt von dem wärmeabgebenden Medium umströmt wird.

Dadurch kann erreicht werden, dass die thermische Trennung von wärmeabgebendem Medium und wärmeaufnehmendem Medium nur solange erfolgt, wie das wärmeabgebende Medium eine zu hohe Temperatur aufweist oder unter bestimmten Bedingungen aufweisen kann. Sobald dagegen eine ausreichende Abkühlung des wärmeabgebende Mediums erreicht wurde, kann durch den direkten Wärmeübergang auf das wärmeaufnehmende Medium gegebenenfalls der Gesamtwärmübergang in der Wärmetauschvorrichtung verbessert werden.

Während eine bevorzugte Verwendung der erfindungsgemäßen Wärmetauschvorrichtung in einer erfindungsgemäßen Antriebseinheit für ein Kraftfahrzeug liegt, ist diese grundsätzlich beliebig verwendbar, insbesondere, wenn in einem Wärmetauscher ein Schutz eines wärmeaufnehmenden Mediums vor Spitzentemperaturen eines wärmeabgebenden Mediums vorteilhaft ist.

Bevorzugt kann vorgesehen sein, dass die Wärmetauschvorrichtung als Gegenstrom-Wärmetauschvorrichtung betrieben wird. Demnach wäre die vorgesehene Durchströmungsrichtung in dem ersten Medienkanal gegenläufig zu der vorgesehenen Durchströmungsrichtung in dem zweiten Medienkanal.

Bezüglich der vorgesehenen Durchströmungsrichtung in dem dritten Medienkanal kann vorteilhaft sein, wenn diese gleichläufig zu der vorgesehenen Durchströmungsrichtung in dem zweiten Medienkanal ist.

In einer weiterhin bevorzugten Ausgestaltung der erfindungsgemäßen Wärmetauschvorrichtung kann vorgesehen sein, dass sich der zweite Medienkanal in dessen vorgesehener Durchströmungsrichtung aufweitet. Dadurch kann einer durch die Erwärmung begründeten Ausdehnung des dritten Mediums Rechnung getragen werden. Insbesondere kann dies die Ausgestaltung der Wärmetauschvorrichtung als Verdampfer ermöglichen, der durch einen Phasenübergang des dritten Mediums von der flüssigen in die gasförmige Phase innerhalb der Wärmetauschvorrichtung gekennzeichnet ist. Die damit verbundene erhebliche Zunahme des von dem zweiten Medium eingenommenen Volumens kann dadurch begegnet werden.

Die erfindungsgemäße Wärmetauschvorrichtung kann besonders bevorzugt als mehrschichtiger Plattenwärmetauscher ausgebildet sein. Dazu können eine Mehrzahl erster, zweiter und dritter Medienkanäle vorgesehen sein, wobei zumindest die zweiten und dritten Medienkanäle jeweils in einer Platte ausgebildet sind und wobei die die zweiten Medienkanäle ausbildenden Platten jeweils zwischen zwei jeweils einen dritten Medienkanal ausbildenden Platten angeordnet sind und wobei zwischen zwei jeweils einen dritten Medienkanal ausbildenden Platten eine einen ersten Medienkanal ausbildende Platte angeordnet ist.

Durch den bei der erfindungsgemäßen Antriebseinheit vorgesehenen Zwischenkreis können weitere Vorteile generiert werden. Einer davon kann in der einfachen und vorteilhaften Integration eines Wärmespeicher, der zur Aufnahme von Wärmeenergie aus dem Abgas (über das Transfermedium) und zur Abgabe der Wärmeenergie an das Arbeitsmedium vorgesehen ist, liegen.

Die Erfindung wird im Folgenden anhand von in den Zeichnungen dargestellten Ausführungsbeispielen näher erläutert. Die Zeichnungen zeigen in
- Fig. 1:: eine erfindungsgemäße Antriebseinheit für ein Kraftfahrzeug in einer schematischen Darstellung;
- Fig. 2:: eine erfindungsgemäße Wärmetauschvorrichtung in einer perspektivischen Darstellung;
- Fig. 3:: die Wärmetauschvorrichtung in einer Explosionsdarstellung;
- Fig. 4:: einen vergrößerter Ausschnitt aus der Fig. 3;
- Fig. 5:: die Wärmetauschvorrichtung in einer Ansicht von vorne; und
- Fig. 6:: eine Prinzipdarstellung der Wärmetauschvorrichtung der Fig. 2 bis 5.

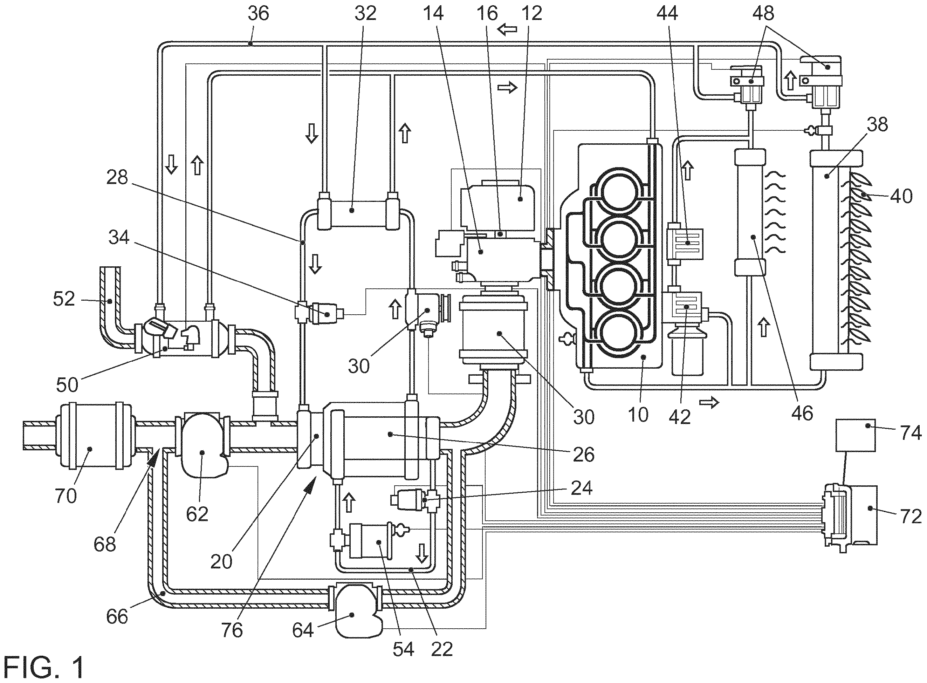

Die in der Fig. 1 dargestellte Antriebseinheit für ein Kraftfahrzeug umfasst eine Brennkraftmaschine mit einem Verbrennungsmotor 10, der beispielsweise als vierzylindriger Hubkolben-Diesel-Verbrennungsmotor ausgebildet ist. In dem Verbrennungsmotor 10 sind somit vier Zylinder ausgebildet, in denen jeweils ein Kolben beweglich gelagert ist. Die Kolben bilden mit den Wänden des dazugehörigen Zylinders jeweils einen Brennraum aus, in dem verdichtetes Frischgas (Luft) mit direkt eingespritztem Kraftstoff verbrannt wird.

Das Frischgas wird dem Verbrennungsmotor über einen zum Großteil nicht dargestellten Frischgasstrang zugeführt. Die Verdichtung des Frischgases erfolgt dabei über den Verdichter 12 eines Abgasturboladers.

Das bei der Verbrennung des Frischgases mit dem Kraftstoff entstehende Abgas wird über einen Abgasstrang aus dem Verbrennungsmotor 10 abgeführt. Dabei durchströmt das Abgas zunächst eine Turbine 14 des Abgasturboladers, die mit dem Verdichter 12 über eine Welle 16 verbunden ist, und anschließend eine erste Abgasnachbehandlungseinrichtung 18, wie beispielsweise einen Katalysator. Stromab der ersten Abgasnachbehandlungseinrichtung 18 ist eine erste, erfindungsgemäß ausgebildete Wärmetauschvorrichtung einer Kreisprozessvorrichtung in den Abgasstrang integriert.

Die erste Wärmetauschvorrichtung der Kreisprozessvorrichtung ist derart ausgebildet, dass diese einen ersten Wärmetauscher 20 und einen zweiten Wärmetauscher 26 in einem 3-Medienwärmetauscher, der konkret als 3-Medien-Verdampfer 76 ausgebildet ist, integriert. Dieser wird von dem Abgas als erstem Medium, dem Arbeitsmedium eines Arbeitskreises 28 als zweitem Medium und von dem Transfermedium eines Zwischenkreises 22 als drittem Medium durchströmt. Dabei ist vorgesehen, dass durch eine entsprechende Anordnung der die einzelnen Medien führenden Kanäle des 3-Medien-Verdampfers 76 das Transfermedium zumindest in einem Abschnitt der gemeinsamen Durchströmungslänge von Abgas und Arbeitsmedium zwischen dem Abgas und dem Arbeitsmedium angeordnet ist, so dass dieses bzw. der Zwischenkreis 22 die Funktion eines Wärmedämpfers und -puffers ausüben kann.

Der Wärmeübergang von dem Abgas auf das Arbeitsmedium kann zu einem Verdampfen und Überhitzen des Arbeitsmedium in dem 3-Medien-Verdampfer 76 führen. In einem rechtsläufigen Kreisprozess der Kreisprozessvorrichtung kann der überhitzte Dampf dann in einer Expansionsvorrichtung 30 expandiert werden, wobei mechanische Leistung erzeugt wird, die zur Erzeugung von elektrischer Energie und/oder zum direkten mechanischen Antrieb des Kraftfahrzeugs zur Unterstützung des Verbrennungsmotors 10 oder von Nebenaggregaten der Brennkraftmaschine eingesetzt werden kann. In einer zweiten Wärmetauschvorrichtung der Kreisprozessvorrichtung, die in dem vorliegenden Ausführungsbeispiel einen als Kondensator ausgebildeten Wärmetauscher 32 umfasst, wird das Arbeitsmedium dann abgekühlt und wieder in die flüssige Phase überführt (kondensiert). Eine Medienpumpe 34 des Arbeitskreises sorgt dann für das erneute Zuführen des flüssigen Arbeitsmediums zu dem 3-Medien-Verdampfer 76.

Der Kondensator wird neben dem Arbeitsmedium auch von dem flüssigen Kühlmittel eines Motorkühlkreises 36 durchströmt, wobei während des rechtsläufigen Kreisprozesses ein Wärmeübergang von dem Arbeitsmedium auf das Kühlmittel erfolgt. Die Abwärme des rechtsläufigen Kreisprozesses kann somit insbesondere über einen Hauptkühler 38 der Antriebsvorrichtung an die Umgebungsluft abgegeben werden. Dabei kann die Menge der durch den Hauptkühler 38 strömenden Umgebungsluft automatisch gesteuert über verstellbare Kühlerlamellen 40 eingestellt werden.

Zusätzlich dazu kann die Abwärme des rechtsläufigen Kreisprozesses in dem Motorkühlkreis 36 dazu genutzt werden, das Kühlmittel nach einem Kaltstart der Brennkraftmaschine schneller auf Betriebstemperatur zu bringen oder die Betriebstemperatur in Betriebsphasen des Verbrennungsmotors 10 mit geringen Lasten möglichst zu halten. Dadurch kann ein Abfall der Temperatur des Verbrennungsmotors 10 sowie auch weiterer Komponenten, wie eines Motorölkühlers 42 (und damit des Motoröls) und eines Getriebeölkühlers 44 (und damit des Getriebeöls) vermieden werden. Auch kann die Abwärme des rechtsläufigen Kreisprozesses zur Verbesserung einer Heizwirkung einer Heizungsanlage für einen Innenraum des Kraftfahrzeugs genutzt werden. Hierzu ist ein Wärmetauscher 46 der Heizungsanlage in den Motorkühlkreis 36 integriert.

Über eine entsprechende Ansteuerung von zwei in den Motorkühlkreis 36 integrierten Kühlmittelpumpen 48 sowie von nicht dargestellten Ventilen kann bedarfsangepasst der Durchfluss von Kühlmittel durch einzelne Komponenten des Motorkühlkreises 36 geregelt werden. Insbesondere kann während der Warmlaufphase nach einem Kaltstart und bei einem anhaltenden Betrieb des Verbrennungsmotors 10 mit sehr geringen Lasten eine Kühlung des Kühlmittels im Hauptkühler 38 unterbunden werden, wodurch die Betriebstemperatur des Kühlmittels möglichst schnell erreicht oder beibehalten werden kann.

Das Kühlmittel des Motorkühlkreises 36 durchströmt weiterhin einen Kühler 50 einer Niederdruckabgasrückführung 52. Die Niederdruckabgasrückführung 52 zweigt stromab des ersten Wärmetauschers 20 der ersten Wärmetauschvorrichtung aus dem Abgasstrang ab. Mittels Abschaltventilen ist es möglich, die Durchströmung des Kühlers 50 der Niederdruckabgasrückführung 52 zu unterbinden, wobei das gesamte Kühlmittel dann über den Kondensator (den Wärmetauscher 32) der Kreisprozessvorrichtung geführt wird.

Die Antriebsvorrichtung umfasst weiterhin einen als Latentwärmespeicher ausgebildeten Wärmespeicher 54, der Wärmeenergie aus dem Transfermedium aufnehmen, über einen langen Zeitraum speichern und bei Bedarf wieder an das Transfermedium abgegeben. Insbesondere kann vorgesehen sein, dass der Wärmespeicher Wärmeenergie aus dem Transfermedium aufnimmt, wenn der Verbrennungsmotor 10 mit hohen Lasten betrieben wird. Die dann in dem ersten Wärmetauscher 20 von dem Abgas auf das Transfermedium übertragbare Wärmeenergie kann dann größer sein, als die in dem rechtsläufigen Kreisprozess umsetzbare Wärmeenergie. Die überschüssige Wärmeenergie kann vorteilhaft zum "Aufladen" des Wärmespeichers 54 eingesetzt werden.

Wird der Verbrennungsmotor 10 dagegen in der Warmlaufphase oder mit niedrigen Lasten betrieben, kann die in dem ersten Wärmetauscher 20 auf das Transfermedium übertragene Wärmeenergie geringer sein, als die im rechtsläufigen Kreisprozess umsetzbare Wärmeenergie. Insbesondere kann diese Wärmeenergie so gering sein, dass diese für das Verdampfen und Überhitzen des Arbeitsmediums im Verdampfer nicht ausreicht. Dann kann durch eine entsprechende Ansteuerung des Wärmespeichers 54 die darin gespeicherte Wärmeenergie zunächst an das Transfermedium und dann im Verdampfer an das Arbeitsmedium übertragen werden. Dadurch kann der rechtsläufige Kreisprozess unterstützt oder sogar erst ermöglicht werden.

Sofern die von dem Wärmespeicher 54 und/oder dem Abgas auf das Transfermedium übertragene Wärmeenergie zu gering ist, um das Verdampfen des Arbeitsmediums zu gewährleisten, kann der Arbeitskreis 28 auch als Transferkreis genutzt werden, so dass dann zwar kein rechtsläufiger Kreisprozess durchgeführt wird und dementsprechend von der Expansionsvorrichtung 30 auch keine mechanische Leistung erzeugt wird, jedoch weiterhin ein Übergang von Wärmeenergie von dem Abgas und/oder dem Wärmespeicher 54 auf das Kühlmittel des Motorkühlkreises 36 erfolgen kann. Um zu verhindern, dass dabei die ungenutzte Expansionsvorrichtung 30 von dem dann als Transfermedium dienenden Arbeitsmedium durchströmt werden muss, kann ein nicht dargestellter Bypass zur Umgehung der Expansionsvorrichtung 30 vorgesehen sein.

Der Abgasstrang umfasst noch eine erste Abgasklappe 62, die stromab des ersten Wärmetauschers 20 und der Abzweigung der Niederdruckabgasrückführung 52 in einen Hauptstrang des Abgasstrangs integriert ist, sowie eine zweite Abgasklappe 64, die in einen den ersten Wärmetauscher 20, die Abzweigung der Niederdruckabgasrückführung 52 und die erste Abgasklappe 62 umgehenden Bypass 66 integriert ist. Mittels der Abgasklappen 62, 64 ist es möglich, den Abgasstrom bei Bedarf teilweise oder vollständig über den Bypass 66 an dem ersten Wärmetauscher 20 und der Niederdruckabgasrückführung 52 vorbei zu leiten. Dies kann insbesondere erfolgen, wenn nach einem Kaltstart zunächst ein stromab einer Zuführmündung 68 des Bypasses 66 angeordnete zweite Abgasnachbehandlungseinrichtung 70 (z.B. ein Dieselpartikelfilter) möglichst schnell auf Betriebstemperatur gebracht werden soll, wenn der teilweise erhebliche Abgasgegendruck, den der erste Wärmetauscher 20 bewirken kann, temporär vermieden werden soll, oder wenn das Abgasenergieangebot so groß ist, dass aus Temperaturschutzgründen ein Teil des Abgases am Verdampfer vorbei geführt werden muss.

Sämtliche ansteuerbare Komponenten der Antriebsvorrichtung werden von einem Motorsteuergerät 72 angesteuert. Diese sind somit vorzugsweise elektrisch ansteuer- und betätigbar ausgestaltet, können aber auch pneumatisch oder hydraulisch betätigt sein, wozu elektrisch ansteuerbare, pneumatische oder hydraulische Aktoren vorgesehen sein können.

Die Ansteuerung der Komponenten durch das Motorsteuergerät 72 kann in Abhängigkeit von Signalen eines Navigationssystems 74 der Antriebsvorrichtung bzw. des Kraftfahrzeugs erfolgen. Dadurch kann u.a. in Abhängigkeit von einem prognostizierten Fahrtprofil vorgesehen sein, den Wärmespeicher 54 zu laden oder zu entladen, um eine möglichst optimale Nutzung der Wärmeenergie des Abgases zu erreichen.

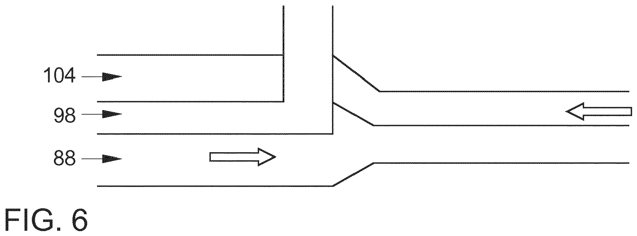

Eine Prinzipdarstellung zur Funktionsweise des 3-Medienwärmetauschers bzw. 3-Medien-verdampfers 76 ist in der Fig. 6 dargestellt.

Gemäß der Fig. 6 erstreckt sich der das Transfermedium führende Medienkanal nur über einen ersten Abschnitt der Durchströmungslänge, so dass in einem zweiten Abschnitt ein direkter Wärmeübergang von dem Abgas auf das Arbeitsmedium möglich ist. Dabei ist vorgesehen, dass der erste Abschnitt eingangsseitig des 3-Medien-Wärmetauschers bezüglich der Abgasströmung vorgesehen ist. Dadurch wirkt das Transfermedium als Wärmedämpfer in dem ersten Abschnitt, in dem das Abgas noch eine so hohe Temperatur aufweisen kann, die zu einer negativen Beeinflussung des Arbeitsmediums führen könnte, während in dem zweiten Abschnitt, in dem das Abgas bereits auf eine unschädliche Temperatur heruntergekühlt wurde, ein direkter Wärmeübergang auf das Arbeitsmedium vorgesehen ist. Durch die dann höhere Temperaturdifferenz zwischen den zwei wärmetauschenden Medien kann der Gesamtwärmeübergang in dem 3-Medien-Wärmetauscher verbessert werden.

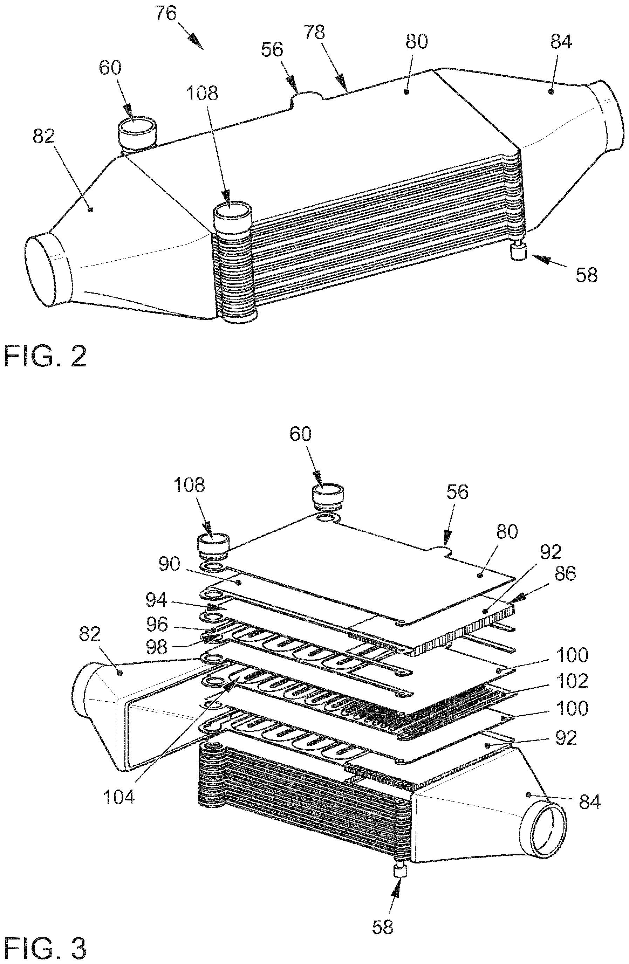

Dabei ist vorgesehen, dass die Strömungsrichtungen von Abgas und Arbeitsmedium entgegengesetzt sind. Die Strömung des Transfermedium kann dabei in beide Richtungen erfolgen. In der Antriebseinheit gemäß der Fig. 2 entspricht die Durchströmungsrichtung des Transfermediums derjenigen des Arbeitsmediums.

Die Fig. 2 bis 5 zeigen eine Ausführungsform eines der Prinzipdarstellung gemäß der Fig. 6 entsprechenden 3-Medien-Verdampfers 76.

Der 3-Medien-Verdampfer ist als mehrschichtiger Plattenwärmetauscher ausgebildet, wobei die einzelnen Platten eine oder mehrere Medienkanäle für das jeweilige durchströmende Medium ausbilden. Die übereinander geschichteten Platten bilden einen Grundkörper 78 des 3-Medien-Verdampfers 76 aus, in dem der Wärmetausch stattfindet. Ober- und unterseitig ist der Grundkörper 78 durch zwei Deckplatten 80 begrenzt. Einlass- und auslassseitig schließen sich an den Grundkörper 78 ein Einlasstrichter 82 und ein Auslasstrichter 84 für das Abgas an, über die der 3-Medien-Verdampfer 76 in die Verrohrung eines Abgasstrangs integriert werden kann.

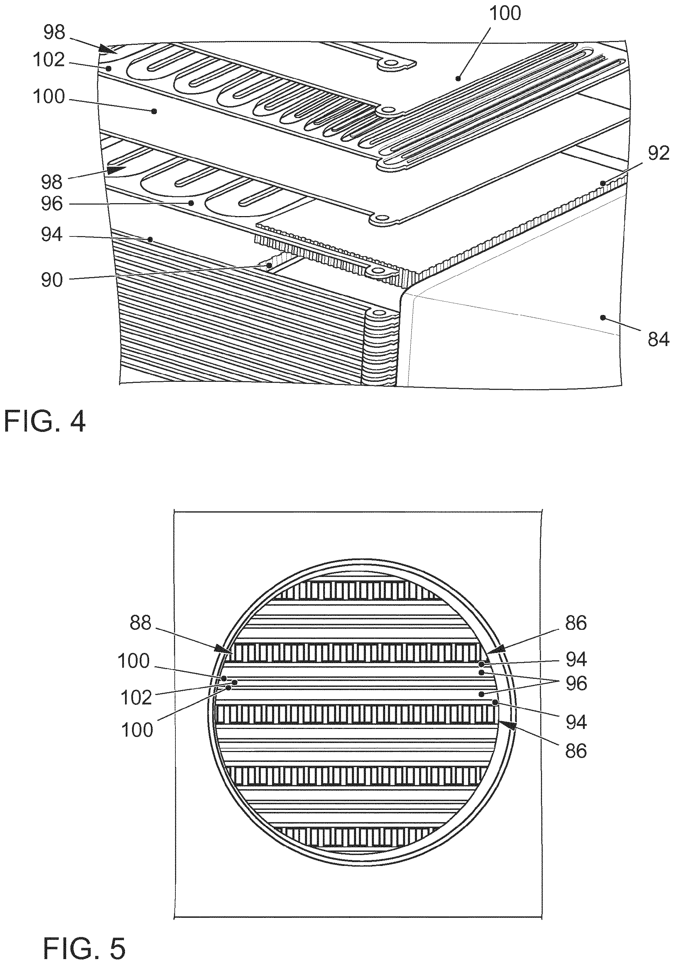

Das durch den Einlasstrichter 82 eintretende Abgas durchströmt die zur Führung des Abgases durch den Grundkörper 78 vorgesehenen Abgas-Platten 86, die, wie sich insbesondere aus der Fig. 5 ergibt, eine Vielzahl von kleinen Medienkanälen 88 für das Abgas ausbilden. Durch die Vielzahl an kleinen Medienkanälen 88 kann die der Kontaktbereich zwischen dem Abgas und den Abgas-Platten 86 groß ausgebildet werden, was unter Berücksichtigung des relativ schlechten Wärmeübergangskoeffizienten des Abgases einen ausreichenden Wärmeübergang aus dem Abgas sicherstellt. Die Abgas-Platten 86 bilden zwei Abschnitte aus, die sich hinsichtlich ihrer Plattenstärken unterscheiden. In einem ersten, dem Einlasstrichter 82 benachbarten Abschnitt 90, ist die Plattenstärke geringer als in einem zweiten, dem Auslasstrichter 84 benachbarten Abschnitt 92. In Schichtungsrichtung gesehen schließt sich beidseitig an jede Abgasplatte 86 entweder eine Deckplatte 80 (außenseitig der zwei äußersten Abgasplatten 86) oder eine erste Zwischenplatte 94 an. Die ersten Zwischenplatten 94 sind derart ausgebildet, dass diese ihren den zweiten Abschnitt 92 der Abgas-Platten 86 überdeckenden Abschnitt aussparen.

Auf der den Abgasplatten 86 abgewandten Seite jeder ersten Zwischenplatte 94 ist jeweils eine Transfermedium-Platte 96 angeordnet. Diese bilden jeweils einen Medienkanal 98 aus, der in Schichtungsrichtung beidseitig offen ist und sich schlangen- bzw. mäanderförmig zwischen einem Einlass- und einem Auslassabschnitt erstreckt. Dabei sparen die Transfermedium-Platten 96 ebenfalls ihren den zweiten Abschnitt 92 der Abgas-Platten 86 überdeckenden Abschnitt aus.

Auf der der erste Zwischenplatte 94 abgewandten Seite jeder Transfermedium-Platte 96 ist jeweils eine zweite Zwischenplatte 100 angeordnet, die den gesamten Horizontalquerschnitt des Grundkörpers 78 und somit auch den zweiten Abschnitt 92 der Abgas-Platten 86 abdeckt.

Die Stärke des zweiten Abschnitts 92 jeder Abgas-Platte 86 ist derart ausgebildet, dass sich diese durch die Aussparungen der benachbarten ersten Zwischenplatte 94 und Transfermedium-Platte 96 erstreckt und die sich anschließende zweite Zwischenplatte 100 in dem entsprechenden Abschnitt kontaktiert.

Auf der der Transfermedium-Platte 96 abgewandten Seite jeder zweiten Zwischenplatte 100 ist jeweils eine Arbeitsmedium-Platte 102 angeordnet. Diese bilden jeweils einen Medienkanal 104 aus, der in Schichtungsrichtung beidseitig offen ist und sich schlangen- bzw. mäanderförmig zwischen einem Einlass- und einem Auslassabschnitt für das Arbeitsmedium erstrecken. Dabei decken die Arbeitsmedium-Platten 102 den gesamten Horizontalquerschnitt des Grundkörpers 78 ab und die Medienkanäle 104 nutzen so gut wie möglich den gesamten Horizontalquerschnitt des Grundkörpers 78 aus.

Der zuvor beschriebene Schichtungsaufbau stellt eine Schichtungsstruktur dar, die mit wechselnder Schichtungsrichtung mehrfach aufeinandergeschichtet den Grundkörper 78 ausbildet. Jede Arbeitsmedium-Platte 102 ist somit beidseitig von einer zweiten Zwischenplatte 100 umgegeben, an die sich jeweils eine Transfermedium-Platte 96, dann jeweils eine erste Zwischenplatte 94, dann jeweils eine Abgas-Platte 86 und dann entweder erneut eine Arbeitsmedium-Platte 102 oder eine Deckplatte 80 anschließt.

Durch die Aussparungen der ersten Zwischenplatten 94 und der Transfermedium-Platten 96 für den zweiten Abschnitt 92 der Abgas-Platten 86 wird der direkte (die für die physische Trennung von Abgas und Arbeitsmedium erforderliche Zwischenschaltung der zweiten Zwischenplatten 100 ausgenommen) Wärmeübergang zwischen dem Abgas und dem Arbeitsmedium in dem zweiten Abschnitt des Wärmetauschers erzielt, wie dies in der Fig. 6 schematisch dargestellt ist. Die von den Arbeitsmedium-Platten 102 ausgebildeten Medienkanäle 104 verbreitern sich ausgehend von den Einlassabschnitten kontinuierlich bis zu den Auslassabschnitten. Dadurch wird der Volumenzunahme des Arbeitsmediums beim Übergang von der flüssigen in die gasförmige Phase Rechnung getragen.

Einlässe und Auslässe für das Transfermedium und das Arbeitsmedium werden durch sich überdeckende, sich in Schichtungsrichtung erstreckende Durchgangsöffnungen in allen Platten (in den Deckplatten nur teilweise) ausgebildet, die bei dem Einlass 56 und dem Auslass 106 für das Transfermedium mit dem jeweiligen Medienkanal 98 in jeder der Transfermedium-Platten 96 verbunden sind und bei dem Einlass 58 und dem Auslass 60 für das Arbeitsmedium mit dem jeweiligen Medienkanal 104 in jeder der Arbeitsmedium-Platten 102 verbunden sind.

### Bezugszeichenliste

- 10: Verbrennungsmotor
- 12: Verdichter des Abgasturboladers
- 14: Turbine des Abgasturboladers
- 16: Welle des Abgasturboladers
- 18: erste Abgasnachbehandlungseinrichtung
- 20: erster Wärmetauscher der ersten Wärmetauschvorrichtung
- 22: Zwischenkreis
- 24: Medienpumpe des Zwischenkreises
- 26: zweiter Wärmetauscher der ersten Wärmetauschvorrichtung
- 28: Arbeitskreis
- 30: Expansionsvorrichtung
- 32: zweiter Wärmetauscher der zweiten Wärmetauschvorrichtung
- 34: Medienpumpe des Arbeitskreises
- 36: Motorkühlkreis
- 38: Hauptkühler
- 40: Lamellen
- 42: Motorölkühler
- 44: Getriebeölkühler
- 46: Wärmetauscher der Heizungsanlage
- 48: Kühlmittelpumpe
- 50: Kühler der Niederdruckabgasrückführung
- 52: Niederdruckabgasrückführung
- 54: Wärmespeicher
- 56: Einlass für das Transfermedium
- 58: Einlass für das Arbeitsmedium
- 60: Auslass für das Arbeitsmedium
- 62: erste Abgasklappe
- 64: zweite Abgasklappe
- 66: Bypass des Abgasstrangs
- 68: Zuführmündung
- 70: zweite Abgasnachbehandlungseinrichtung
- 72: Motorsteuergerät
- 74: Navigationssystem
- 76: 3-Medien-Verdampfer
- 78: Grundkörper
- 80: Deckplatte
- 82: Einlasstrichter
- 84: Auslasstrichter
- 86: Abgas-Platte
- 88: Medienkanal in einer Abgas-Platte
- 90: erster Abschnitt einer Abgas-Platte
- 92: zweiter Abschnitt einer Abgas-Platte
- 94: erste Zwischenplatte
- 96: Transfermedium-Platte
- 98: Medienkanal in einer Transfermedium-Platte
- 100: zweite Zwischenplatte
- 102: Arbeitsmedium-Platte
- 104: Medienkanal in einer Arbeitsmedium-Platte
- 106: Auslass für das Transfermedium

## Patentansprüche

1. Wärmetauschvorrichtung mit einem ersten Medienkanal (88) für ein erstes Medium und einem zweiten Medienkanal (104) für ein zweites Medium, wobei in zumindest einem Abschnitt der Wärmetauschvorrichtung ein dritter Medienkanal (98) für ein Transfermedium zwischen dem ersten Medienkanal (88) und dem zweiten Medienkanal (104) ausgebildet ist, so dass ein Wärmeübergang von dem ersten Medium auf das zweite Medium über das Transfermedium erfolgt, **dadurch gekennzeichnet, dass** der dritte Medienkanal (98) für das Transfermedium nur in einem Abschnitt der Wärmetauschvorrichtung zwischen dem ersten Medienkanal (88) und dem zweiten Medienkanal (104) angeordnet ist.

2. Wärmetauschvorrichtung gemäß Anspruch 1, **dadurch gekennzeichnet, dass** das erste Medium als wärmeabgebend und das zweite Medium als wärmeaufnehmend vorgesehen ist.

3. Wärmetauschvorrichtung gemäß Anspruch 1 oder 2, **dadurch gekennzeichnet, dass** der zweite Medienkanal (104) und/oder der dritte Medienkanal (98) in einer Platte ausgebildet ist, wobei die den dritten Medienkanal (98) ausbildende Platte von dem wärmeabgebenden Medium umströmt wird.

4. Wärmetauschvorrichtung gemäß Anspruch 3, **dadurch gekennzeichnet, dass** die den dritten Medienkanal (98) ausbildende Platte kleiner als die den zweiten Medienkanal (104) ausbildende Platte ist, so dass die den zweiten Medienkanal (104) ausbildende Platte in einem Abschnitt von dem wärmeabgebenden Medium umströmt wird.

5. Wärmetauschvorrichtung gemäß einem der vorhergehenden Ansprüche, **dadurch gekennzeichnet, dass** die vorgesehene Durchströmungsrichtung in dem ersten Medienkanal (88) gegenläufig zu der vorgesehenen Durchströmungsrichtung in dem zweiten Medienkanal (104) ist.

6. Wärmetauschvorrichtung gemäß einem der vorhergehenden Ansprüche, **dadurch gekennzeichnet, dass** die vorgesehene Durchströmungsrichtung in dem dritten Medienkanal (98) gleichläufig zu der vorgesehenen Durchströmungsrichtung in dem zweiten Medienkanal (104) ist.

7. Wärmetauschvorrichtung gemäß einem der vorhergehenden Ansprüche, **dadurch gekennzeichnet, dass** sich der zweite Medienkanal (104) in dessen vorgesehener Durchströmungsrichtung aufweitet.

8. Wärmetauschvorrichtung gemäß einem der vorhergehenden Ansprüche, **dadurch gekennzeichnet, dass** eine Mehrzahl erster Medienkanäle (88), zweiter Medienkanäle (104) und dritter Medienkanäle (98) vorgesehen sind, wobei die zweiten Medienkanäle (104) und dritten Medienkanäle (98) in jeweils einer Platte ausgebildet sind und wobei die die zweiten Medienkanäle (104) ausbildenden Platten jeweils zwischen zwei jeweils einen dritten Medienkanal (98) ausbildenden Platten angeordnet sind und wobei zwischen zwei jeweils einen dritten Medienkanal (98) ausbildenden Platten eine einen ersten Medienkanal (88) ausbildende Platte angeordnet ist.

9. Antriebseinheit für ein Kraftfahrzeug mit
- einer Brennkraftmaschine, die einen Verbrennungsmotor (10) sowie einen Abgasstrang, über den Abgas aus dem Verbrennungsmotor (10) abführbar ist, umfasst, sowie mit
- einer Kreisprozessvorrichtung, die zur Wandlung der in dem Abgas enthaltenen Wärmeenergie in einem rechtsläufigen thermodynamischen Kreisprozess in mechanische Arbeit einsetzbar ist, wobei der Kreisprozess
- einen Wärmeübergang von dem Abgas auf ein Arbeitsmedium in einer ersten Wärmetauschvorrichtung umfasst, wodurch die Temperatur und/oder der Druck des Arbeitsmediums erhöht wird,
- eine Expansion des Arbeitsmediums in einer Expansionsvorrichtung (30) zur Erzeugung der mechanischen Arbeit umfasst, und
- einen Wärmeübergang von dem Arbeitsmedium auf ein Kühlmedium in einer zweiten Wärmetauschvorrichtung umfasst
**gekennzeichnet durch** einen Zwischenkreis (22) mit einem Transfermedium, wobei die erste Wärmetauschvorrichtung gemäß einem der vorhergehenden Ansprüche ausgebildet ist, so dass Wärmeenergie von dem Abgas auf das Transfermedium und von dem Transfermedium auf das Arbeitsmedium übergeht.

10. Antriebseinheit gemäß Anspruch 9, **gekennzeichnet durch** einen in den Zwischenkreis (22) integrierten Wärmespeicher (54).

## Claims

1. Heat exchange device with a first media channel (88) for a first medium and a second media channel (104) for a second medium, wherein in at least one section of the heat exchange device a third media channel (98) for a transfer medium is formed between the first media channel (88) and the second media channel (104), so that exchange of heat takes place from the first medium to the second medium via the transfer medium, **characterised in that** the third media channel (98) for the transfer medium is arranged only in a section of the heat exchange device between the first media channel (88) and the second media channel (104).

2. Heat exchange device according to claim 1, **characterised in that** the first medium is provided as heat-releasing and the second medium as heat-receiving.

3. Heat exchange device according to claim 1 or 2, **characterised in that** the second media channel (104) and/or the third media channel (98) is formed in a panel, wherein the heat-releasing medium flows around the panel forming the third media channel (98).

4. Heat exchange device according to claim 3, **characterised in that** the panel forming the third media channel (98) is smaller than the panel forming the second media channel (104), so that the heat-releasing medium flows in a section around the panel forming the second media channel (104).

5. Heat exchange device according to one of the preceding claims, **characterised in that** the provided direction of flow in the first media channel (88) is opposite to the provided direction of flow in the second media channel (104).

6. Heat exchange device according to one of the preceding claims, **characterised in that** the provided direction of flow in the third media channel (98) goes in the same direction as the provided direction of flow in the second media channel (104).

7. Heat exchange device according to one of the preceding claims, **characterised in that** the second media channel (104) expands in its provided direction of flow.

8. Heat exchange device according to one of the preceding claims, **characterised in that** a plurality of first media channels (88), second media channels (104) and third media channels (98) are provided, wherein the second media channels (104) and third media channels (98) are formed in a panel, respectively, and wherein the panels forming the second media channels (104) are arranged, respectively, between two panels forming, respectively, a third media channel (98) and wherein a panel forming a first media channel (88) is arranged between two panels forming, respectively, a third media channel (98).

9. Drive unit for a motor vehicle with
- an internal combustion engine comprising a combustion motor (10) as well as an exhaust tract via which exhaust can be conducted from the combustion motor (10), as well as with
- a cycle process device that can be used for converting the thermal energy contained in the exhaust in a clockwise thermodynamic cycle process into mechanical work, wherein the cycle process
- comprises a heat transfer from the exhaust to a work medium in a first heat exchange device, with the result that the temperature and/or the pressure of the work medium is increased,
- comprises an expansion of the work medium in an expansion device (30) for producing the mechanical work, and
- comprises a heat transfer from the work medium to a cooling medium in a second heat exchange device, **characterised by** an intermediate cycle (22) with a transfer medium, wherein the first heat exchange device is formed according to one of the preceding claims, so that thermal energy passes from the exhaust to the transfer medium and from the transfer medium to the work medium.

10. Drive unit according to claim 9, **characterised by** a heat accumulator (54) integrated in the intermediate cycle (22).

## Revendications

1. Dispositif d'échange thermique comportant un premier canal de fluide (88) pour un premier fluide et un second canal de fluide (104) pour un second fluide, dans lequel dans au moins une partie du dispositif d'échange thermique, un troisième canal de fluide (98) est formé pour un fluide de transfert entre le premier canal de fluide (88) et le second canal de fluide (104) de sorte qu'un transfert de chaleur du premier fluide vers le second fluide a lieu via le fluide de transfert, **caractérisé en ce que** le troisième canal de fluide (98) pour le fluide de transfert est agencé uniquement dans une partie du dispositif d'échange thermiqueentre le premier canal de fluide (88) et le second canal de fluide (104).

2. Dispositif d'échange thermique selon la revendication 1, **caractérisé en ce que** le premier fluide est prévu comme émettant de la chaleur et le second fluide comme absorbant de la chaleur.

3. Dispositif d'échange thermique selon la revendication 1 ou 2, **caractérisé en ce que** le second canal de fluide (104) et/ou le troisième canal de fluide (98) est formé dans une plaque, la plaque formant le troisième canal de fluide (98) étant parcourue par le fluide émettant de la chaleur.

4. Dispositif d'échange thermique selon la revendication 3, **caractérisé en ce que** la plaque formant le troisième canal de fluide (98) est plus petite que la plaque formant le second canal de fluide (104), de sorte que la plaque formant le second canal de fluide (104) est parcourue dans une partie par le fluide émettant de la chaleur.

5. Dispositif d'échange thermique selon l'une des revendications précédentes, **caractérisé en ce que** le sens d'écoulement prévu dans le premier canal de fluide (88) est opposé au sens d'écoulement prévu dans le second canal de fluide (104).

6. Dispositif d'échange thermique selon l'une des revendications précédentes, **caractérisé en ce que** le sens d'écoulement prévu dans le troisième canal de fluide (98) est dans le même sens par rapport au sens d'écoulement prévu dans le second canal de fluide (104).

7. Dispositif d'échange thermique selon l'une des revendications précédentes, **caractérisé en ce que** le second canal de fluide (104) s'élargit dans son sens d'écoulement prévu.

8. Dispositif d'échange thermique selon l'une des revendications précédentes, **caractérisé en ce que** est prévue une pluralité de premiers canaux de fluide (88), de seconds canaux de fluide (104) et de troisièmes canaux de fluide (98), les seconds canaux de fluide (104) et les troisièmes canaux de fluide (98) étant formés chacun dans une plaque et dans lequel les plaques formant les seconds canaux de fluide (104) sont agencées respectivement entre deux plaques formant chacune un troisième canal de fluide (98) et dans lequel une plaque formant un premier canal de fluide (88) est agencée entre deux plaques formant chacune un troisième canal de fluide (98).

9. Unité d'entraînement pour un véhicule automobile avec
- un moteur à combustion interne, qui comprend un moteur à combustion interne (10) et une ligne d'échappement par laquelle les gaz d'échappement provenant du moteur à combustion interne (10) peuvent être évacués, et avec
- un dispositif de cycle fermé pouvant être utilisé pour convertir l'énergie thermique contenue dans les gaz d'échappement dans un cycle fermé thermodynamique en sens horaire en travail mécanique, le cycle fermé
- comprenant un transfert de chaleur des gaz d'échappement à un fluide de travail dans un premier dispositif d'échange thermique, moyennant quoi la température et/ou la pression du fluide de travail est augmentée,
- comprenant une expansion du fluide de travail dans un dispositif d'expansion (30) pour générer le travail mécanique, et
- comprenant un transfert de chaleur du fluide de travail à un fluide de refroidissement dans un second dispositif d'échange thermique, **caractérisé par** un circuit intermédiaire (22) avec un fluide de transfert, dans lequel le premier dispositif d'échange thermique est formé selon l'une des revendications précédentes, de sorte que l'énergie thermique des gaz d'échappement passe au fluide de transfert et du fluide de transfert au fluide de travail.

10. Unité d'entraînement selon la revendication 9, **caractérisée par** un accumulateur de chaleur (54) intégré dans le circuit intermédiaire (22).
